# EUROPEAN PATENT APPLICATION

(11) **EP 4 596 160 A2**
(43) Date of publication of application: **06.08.2025**
(21) Application number: 24215896.2
(22) Date of filing: 27.11.2024
(51) Int. Cl.: B23K 26/082, B08B 7/00, B23K 26/354, H02G 1/12, B23K 26/08, B23K 101/32, B23K 101/34

(54) **COATING REMOVING METHODS AND COATING REMOVING DEVICES**

(30) Priority: 31.01.2024 JP 2024012868; 19.07.2024 JP 2024115748
(71) Applicant: Kataoka Corporation, Kyoto-shi, Kyoto 601-8203 (JP)
(72) Inventor: MIYAKE, Masaki, 601-8203 Kyoto (JP); MIYAI, Ryuichi, 601-8203 Kyoto (JP); ENDO, Osamu, 601-8203 Kyoto (JP)
(74) Representative: Seemann & Partner Patentanwälte mbB

(57) **Abstract**

The present application relates to a coating removing method for removing a coating of a wire (100) by laser beam (L) while moving the wire (100) relative to a laser irradiation device (10) in a feeding direction (D). The method includes the following steps: a first irradiation step of moving a spot region of the laser beam (L) in a first direction to traverse the wire (100) and irradiating, with the laser beam (L), a first irradiation region on the wire (100); a first feeding step of moving the spot region in the feeding direction of the wire (100) after the first irradiation step; and a second irradiation step of moving the spot region of the laser beam (L) in a second direction opposite to the first direction to traverse the wire (100) and irradiating, with the laser beam (L), a second irradiation region that overlaps with at least a part of the first irradiation region. The present application relates also to a corresponding device (1).

## Description

### TECHNICAL FIELD

The present invention relates to a coating removing method and a coating removing device.

### BACKGROUND ART

A coating removing method described in Patent Literature 1 discloses a method of irradiating an insulation coating of an electric wire with laser beam to remove the insulation coating.

### CITATION LIST

### PATENT LITERATURE

Patent Literature 1: JP2021-158819A

### SUMMARY OF INVENTION

### TECHNICAL PROBLEM

As a method for removing an insulation coating of an electric wire, a method of emitting laser beam as described in Patent Literature 1 is known.

Here, in order to increase a removal rate of the insulation coating, in a coating removing method by laser beam in the related art, it is necessary to feed the electric wire back and forth against the laser beam, such as feed the insulated electric wire back and forth against the laser beam, thereby emitting laser for a plurality of times or applying laser for a plurality of times by using a plurality of laser irradiation devices. However, when the laser is emitted for a plurality of times, productivity of a product may be deteriorated, and when a plurality of laser irradiation devices are provided, the device may become large in size.

Therefore, an object of the present disclosure is to provide a coating removing method and a coating removing device which are efficient.

### SOLUTION TO PROBLEM

A coating removing method according to an aspect of the present invention is a coating removing method for removing a coating of a wire by laser beam while moving the wire relative to a laser irradiation device in a feeding direction, the method including:
a first irradiation step of moving a spot region of the laser beam in a first direction to traverse the wire and irradiating a first irradiation region on the wire with the laser beam;
a first feeding step of moving the spot region in the feeding direction of the wire after the first irradiation step; and
a second irradiation step of moving the spot region of the laser beam in a second direction opposite to the first direction to traverse the wire and irradiating, with the laser beam, a second irradiation region that overlaps with at least a part of the first irradiation region.

A coating removing device according to an aspect of the present invention is a coating removing device for removing a coating of a wire by laser beam while moving the wire relative to a laser irradiation device in a feeding direction, in which
the laser irradiation device includes
a laser beam source unit configured to output laser beam,
a scanning unit configured to scan a spot region of the laser beam on the wire, and
a control unit configured to control the scanning unit, and
the control unit controls the scanning unit to
move the spot region of the laser beam in a first direction to traverse the wire and irradiate a first irradiation region with the laser beam,
move the spot region in the feeding direction, and
move the spot region of the laser beam in a second direction opposite to the first direction to traverse the wire and irradiate, with the laser beam, a second irradiation region that overlaps with at least a part of the first irradiation region.

### ADVANTAGEOUS EFFECTS OF INVENTION

According to the present invention, it is possible to provide a coating removing method and a coating removing device which are efficient.

### BRIEF DESCRIPTION OF DRAWINGS

FIG. 1 is a schematic view of a coating removing device that executes a coating removing method according to the present embodiment.
FIG. 2 is a block diagram of a laser irradiation device according to the present disclosure.
FIG. 3 is a schematic view of a galvanometer optical system according to an embodiment.
FIG. 4 is a diagram illustrating a process of coating removing of a wire by a coating removing device according to the embodiment.
FIG. 5 is a diagram illustrating the process of coating removing of the wire by the coating removing device according to the embodiment.
FIG. 6 is a diagram illustrating the process of coating removing of the wire by the coating removing device according to the embodiment.
FIG. 7 is a graph illustrating a relation between a time from end of a first irradiation step to start of a second irradiation step and an exposure degree of a center conductor of a wire.
FIG. 8 is a view illustrating an internal structure of a laser irradiation device according to another embodiment.
FIG. 9 is a view illustrating an internal structure of a laser irradiation device according to another embodiment.
FIG. 10 is a view illustrating an internal structure of a laser irradiation device according to another embodiment.

### DESCRIPTION OF EMBODIMENTS

Hereinafter, embodiments of the present invention will be described with reference to the drawings. Dimensions of members illustrated in the drawings may be different from actual dimensions of the members for convenience of description.

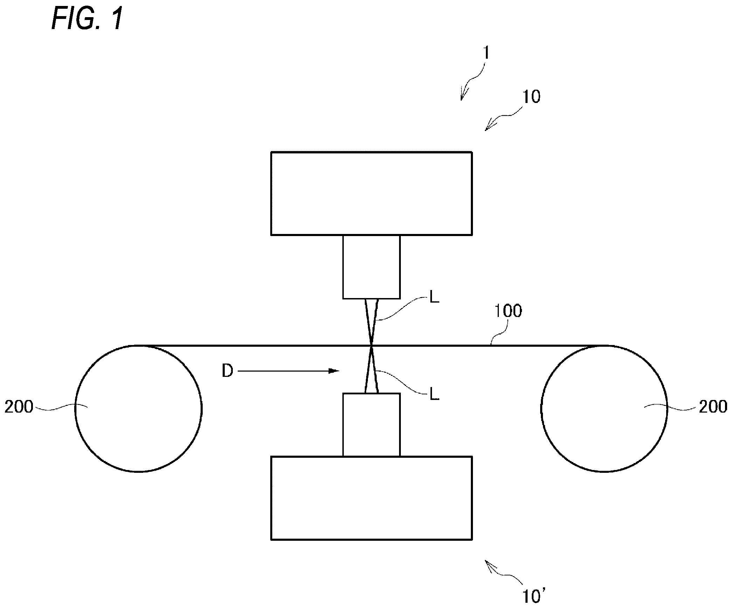

FIG. 1 is a schematic view of a coating removing device that executes a coating removing method according to the present embodiment. As illustrated in FIG. 1, a coating removing device 1 includes laser irradiation devices 10 and 10' and a conveyance device 200. The conveyance device 200 includes a pair of rollers, and is wound with a wire 100 having an insulation coating. In the present embodiment, the wire 100 is a coated wire having a center conductor and an insulation coating. The insulation coating may be, for example, polyimide. The conveyance device 200 may feed the wire 100 from one roller to the other roller along a feeding direction D.

The laser irradiation devices 10 and 10' can irradiate the wire 100 with laser beam L to remove the insulation coating of the wire 100. The laser irradiation devices 10 and 10' emit the laser beam L in a direction intersecting the feeding direction of the wire 100. The laser irradiation devices 10 and 10' are provided to face each other with the wire 100 sandwiched therebetween. The laser irradiation device 10 emits the laser beam L to a region of a half circumference of the wire 100, and the laser irradiation device 10' emits the laser beam L to a region of the remaining half circumference of the wire 100. The laser irradiation device 10 and the laser irradiation device 10' illustrated in FIG. 1 have the same configuration. Therefore, the "laser irradiation device 10" in the following description may be replaced with the laser irradiation device 10' as appropriate.

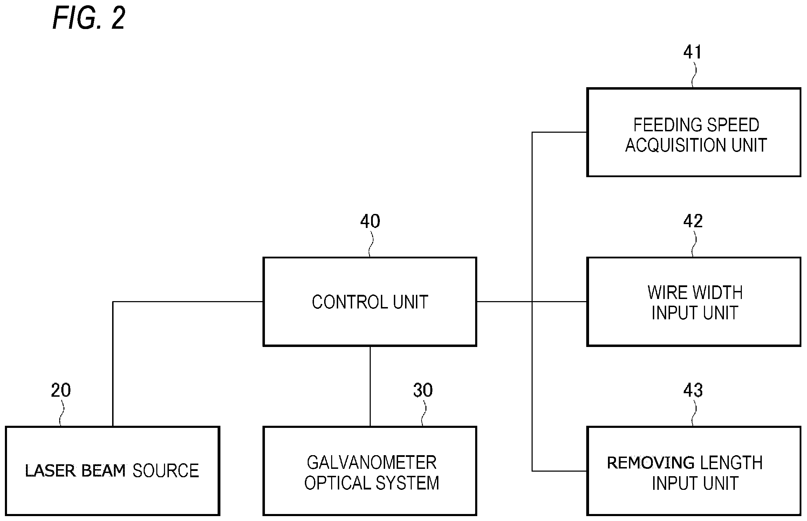

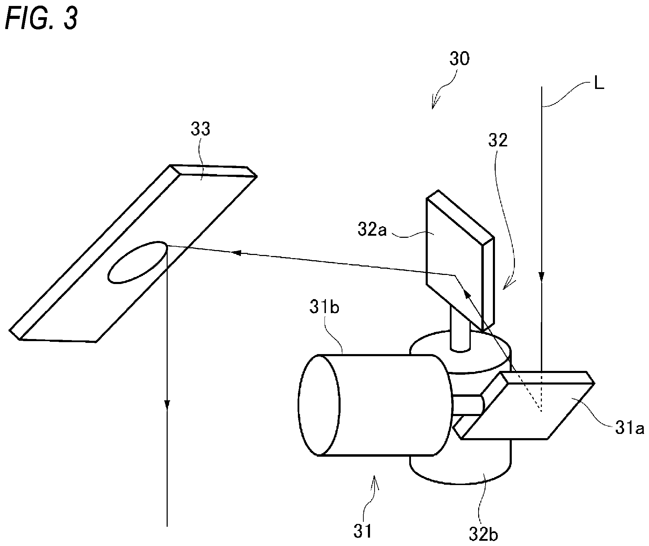

Next, the laser irradiation device 10 according to the present disclosure will be described in detail with reference to FIGS. 2 and 3. FIG. 2 is a block diagram of the laser irradiation device 10 according to the present disclosure. FIG. 3 is a schematic view of a galvanometer optical system 30 according to an embodiment. As illustrated in FIG. 2, the laser irradiation device 10 includes a laser beam source 20, a scanning unit 30, a control unit 40, a feeding speed acquisition unit 41, a wire width input unit 42, and a removing length input unit 43.

The laser beam source 20 is an oscillator capable of emitting the laser beam L (see FIG. 1). In the present embodiment, the laser beam source 20 may emit laser beam having a wavelength of, for example, 400 nm to 470 nm.

For example, the laser beam source 20 that can emit the laser beam L having a wavelength from 354 nm, which is a wavelength of a UV laser, to 1,064 nm, which is a wavelength of an IR laser, may be used depending on a material of a removing target.

In the present embodiment, the scanning unit 30 is the galvanometer optical system 30. The galvanometer optical system 30 can displace the laser beam L emitted from the laser beam source 20 in any two-dimensional direction. As illustrated in FIG. 3, the galvanometer optical system 30 includes an X-axis galvanometer scanner 31, a Y-axis galvanometer scanner 32, and a mirror 33.

The X-axis galvanometer scanner 31 includes an X-axis galvanometer mirror 31a and an X-axis galvanometer motor 31b. The X-axis galvanometer mirror 31a is fixed to an output shaft of the X-axis galvanometer motor 31b. By driving the X-axis galvanometer motor 31b, an orientation of the X-axis galvanometer mirror 31a is changed.

The Y-axis galvanometer scanner 32 includes a Y-axis galvanometer mirror 32a and a Y-axis galvanometer motor 32b. The Y-axis galvanometer mirror 32a is fixed to an output shaft of the Y-axis galvanometer motor 32b. By driving the Y-axis galvanometer motor 32b, an orientation of the Y-axis galvanometer mirror 32a is changed.

The laser beam L emitted from the laser beam source 20 is reflected by the X-axis galvanometer mirror 31a and the Y-axis galvanometer mirror 32a, and then guided to the wire 100 by the mirror 33.

The control unit 40 may control the laser beam source 20 and the galvanometer optical system 30. More specifically, the control unit 40 may control on and off of emission of the laser beam L emitted from the laser beam source 20. The control unit 40 can control the X-axis galvanometer motor 31b and the Y-axis galvanometer motor 32b to change angles of the X-axis galvanometer mirror 31a and the Y-axis galvanometer mirror 32a, thereby changing an emission position of the laser beam L and a moving speed of the emission position.

The feeding speed acquisition unit 41 may acquire a feeding speed of the wire 100. The feeding speed acquisition unit 41 can be configured to acquire an output of a feeding speed sensor (not illustrated) that detects the feeding speed of the wire 100 or acquire a rotational speed of the roller.

The wire width input unit 42 can freely input, by an operator, a length of the wire 100 in the width direction in which the laser beam L is emitted. The removing length input unit 43 can freely input, by the operator, a removing length of the coating of the wire 100. The wire width input unit 42 and the removing length input unit 43 can be configured to acquire a signal output from an input device such as a keyboard or a touch panel operated by the operator.

The feeding speed acquisition unit 41, the wire width input unit 42, and the removing length input unit 43 are connected to the control unit 40. The control unit 40 controls the laser beam source 20 and the galvanometer optical system 30 based on information obtained from the feeding speed acquisition unit 41, the wire width input unit 42, and the removing length input unit 43.

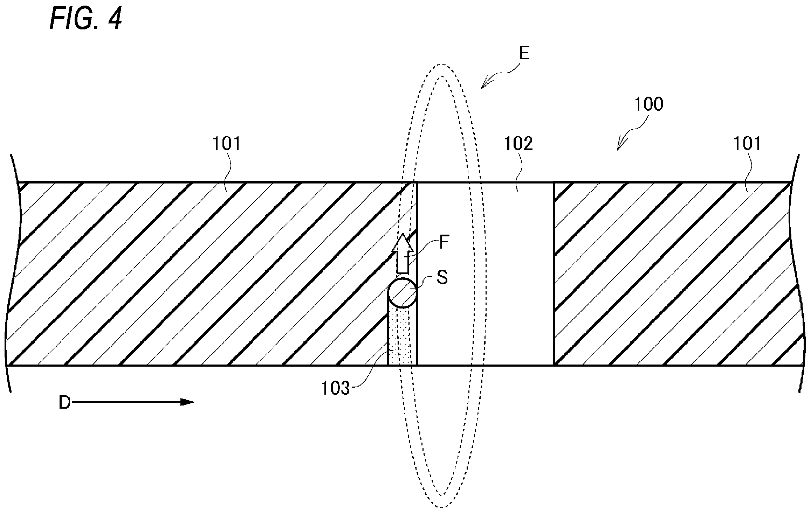

Next, the coating removing method of the coating removing device 1 according to the present embodiment will be described in detail with reference to FIGS. 4 to 6. FIGS. 4 to 6 are diagrams illustrating a process of coating removing of the wire 100 by the coating removing device 1 according to an embodiment.

The coating removing device 1 according to the present embodiment may execute a first irradiation step, a first feeding step, a second irradiation step, and a second feeding step, and the coating of the wire 100 is removed by repeating these steps. That is, the coating removing device 1 executes the first irradiation step again after executing the second feeding step.

The laser irradiation device 10 irradiates the wire 100 with the laser beam L in a range of a spot region S from start of the first irradiation step to end of the second feeding step. In the present embodiment, the spot region S of the laser beam L emitted by the laser irradiation device 10 moves to draw an elliptical locus E on a surface of the wire 100. A shape of the locus E may be freely set by the control unit 40.

FIGS. 4 to 6 illustrate the process of removing the coating of the wire 100, and a coated region 101 in which the coating is not removed and a removed region 102 in which the coating is removed are present in the wire 100. In the coating removing method according to the present embodiment, the laser irradiation device 10 irradiates the coated region 101 with the laser beam L to remove the coating, and exposes a conductor portion of the wire 100 to form the removed region 102. In the present embodiment, the removed region 102 refers to, for example, a region in which a coating removal rate calculated by a mass ratio in the wire 100 is 90% or more. A value of the coating removal rate is not uniquely determined, and may vary depending on laser irradiation conditions such as a wavelength and an intensity of the laser beam, and a type of a coating material.

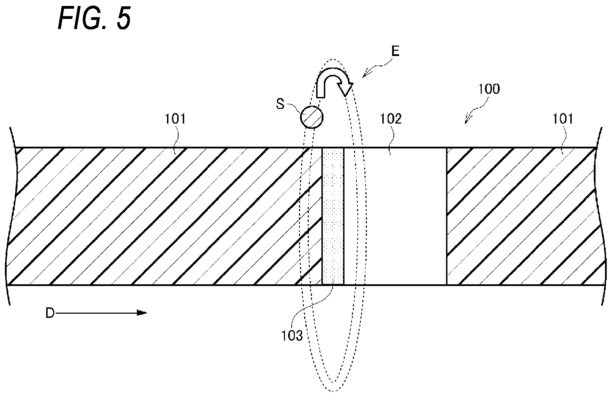

The first irradiation step and the first feeding step performed by the coating removing device will be described with reference to FIGS. 4 and 5.

In the first irradiation step, the laser irradiation device 10 irradiates the wire 100 with the laser beam L to traverse the wire 100 along a first direction F. The first direction F is a width direction of the wire 100 and is also a direction orthogonal to the feeding direction D. A region irradiated with the laser beam L in the first irradiation step is referred to as a first irradiation region 103. In a case where a coating made of a resin such as polyimide is irradiated with the laser beam L, the coating is removed by evaporating the coating reaching a higher temperature due to the laser beam. As illustrated in FIG. 5, when the first irradiation step is finished, the first irradiation region 103 is in a state where the coating is removed. The coating removal rate in the first irradiation region 103 illustrated in FIG. 5 may be less than 90%.

After the first irradiation step is finished, the laser irradiation device 10 shifts to the first feeding step (see FIG. 5). In the first feeding step, the laser irradiation device 10 moves the spot region S in the feeding direction D. In the present embodiment, the laser irradiation device 10 moves the spot region S along the elliptical locus E to move the spot region S in the feeding direction D. While the laser irradiation device 10 executes the first feeding step, the conveyance device 200 continues to feed the wire 100 in the feeding direction D. Here, a speed of the spot region S in the feeding direction D in the first feeding step is set to be smaller than the feeding speed of the wire 100.

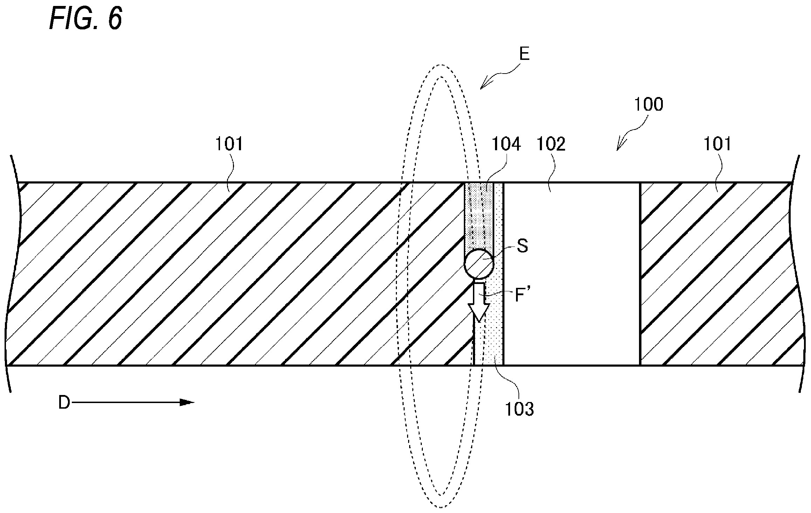

Next, the second irradiation step will be described with reference to FIG. 6. In the second irradiation step, the laser irradiation device 10 irradiates the spot region S with the laser beam L to traverse the wire 100 along a second direction F' opposite to the first direction F. A region irradiated with the laser beam L in the second irradiation step is referred to as a second irradiation region 104. The second irradiation region 104 overlaps with at least a part of the first irradiation region 103 in the wire 100. In an overlapping region where the first irradiation region 103 and the second irradiation region 104 overlap, the coating removal rate of the wire 100 is 90% or more.

With the coating removing method according to the present disclosure, in the first irradiation step, the first irradiation region of the wire is irradiated with the laser beam, the first feeding step is interposed, and in the second irradiation step, the second irradiation region is irradiated with the laser beam to overlap with at least a part of the first irradiation region. The first feeding step is provided between the first irradiation step and the second irradiation step.

With the coating removing method according to the present disclosure, the first irradiation region 103 in the first irradiation step overlaps with at least a part of the second irradiation region 104 in the second irradiation step. Since the same region can be irradiated with the laser beam L twice, the coating is easily removed and the coating removal efficiency is high. In addition, since the same light source is used to irradiate the same region with the laser beam L twice, the coating removal device is not complicated as compared with a configuration in which two light sources are provided for irradiation twice.

With the coating removing method according to the present disclosure, a high coating removal rate can be efficiently implemented by a single wire feeding operation, and therefore, for example, it is particularly effective in insulation coating removing of a terminal of a motor used in an electric vehicle and a wire for welding.

With the coating removing method according to the present disclosure, the first irradiation region 103 irradiated with the laser beam L in the first irradiation step and the second irradiation region 104 irradiated with the laser beam L in the second irradiation step at least partially overlap with each other. When the same region is irradiated with the laser beam L twice within a short period of time, there is a concern that a temperature of this region becomes high. However, according to the present disclosure, the first feeding step is present between the first irradiation step and the second irradiation step, and therefore, it is possible to prevent the wire 100 from reaching a high temperature. Accordingly, it is possible to provide a coating removal method capable of efficiently removing the coating while maintaining the quality of the wire 100. Considering a cooling rate of the wire 100, it is desirable that a time from the end of the first irradiation step to the start of the second irradiation step (that is, time required for first feeding step) is at least 0.5 ms or more.

With the coating removing method according to the present disclosure, the spot region S draws an elliptical locus. That is, the coating removing method according to the present disclosure includes the second feeding step of moving the spot region in a direction opposite to the feeding direction D after the second irradiation step, and a moving amount in the first feeding step is equal to a moving amount in the second feeding step. With this configuration, since the moving amount in the first feeding step is equal to the moving amount in the second feeding step, the first irradiation region 103 can be set at the same position as viewed from the laser irradiation device 10.

In the present disclosure, the elliptical locus E of the spot region S has a major axis of the ellipse orthogonal to the feeding direction D and a minor axis of the ellipse along the feeding direction D. That is, in the coating removing method according to the present disclosure, a moving amount in the feeding direction D in the first irradiation step may be smaller than a moving amount in the feeding direction D in the first feeding step. With this configuration, the moving amount in the feeding direction D in the first irradiation step is small, and therefore, the removed region 102 is easily formed parallel to a width direction of the wire 100.

In the coating removing method according to the present disclosure, a moving amount in the first direction F in the first irradiation step is preferably larger than a moving amount in the first direction F in the first feeding step. When the moving amount in the first direction F in the first feeding step is small, the first feeding step can be finished in a short period of time, and the overlapping region between the first irradiation region 103 and the second irradiation region 104 can be easily increased. In addition, when the moving amount in the first direction F in the first irradiation step is large, the spot region S is moved in the first direction F at a sufficiently large speed with respect to the feeding speed of the wire 100, and therefore, the removed region 102 is easily formed parallel to the width direction of the wire 100.

In the coating removing method according to the present disclosure, when n is a natural number and i is a natural number smaller than n, from start of the first irradiation step to end of the second feeding step is repeated n times, and an i-th first irradiation region and an (i-1)-th second irradiation region overlap at least partially. With the above configuration, a series of removing steps from the first irradiation step to the second irradiation step is performed a plurality of times, and therefore, a plurality of portions of the wire can be efficiently coating-removed.

In the coating removing method according to the present disclosure, the laser beam may be continuously emitted from the start of the first irradiation step to the end of the second feeding step. With the above configuration, the frequency of switching on and off of the laser beam source of the laser irradiation device can be reduced, and the burden on the laser beam source is small.

Although the coating removing method according to the present embodiment has been described above, the present disclosure is not limited to the above-described embodiment. For example, the locus E drawn by the spot region S of the laser beam L emitted by the laser irradiation device 10 may be a rectangular shape such as a rectangular, or may be a figure-8 shape or the like. It is preferable that the locus E of the spot region S is formed in one stroke to return the spot region S to a start position of the first irradiation step after the second feeding step. The locus E drawn by the spot region may not be a closed figure.

As illustrated in FIG. 1, in the present embodiment, an example in which two laser irradiation devices 10 are provided at specific positions in the feeding direction of the wire 100 has been described, but the present disclosure is not limited thereto. For example, one laser irradiation device 10 may be provided at a specific position in the feeding direction of the wire 100, or three or more laser irradiation devices 10 may be provided. In addition, the laser irradiation device 10 may be provided at a plurality of positions in the feeding direction of the wire 100. The coating removing can be performed simultaneously at a plurality of portions, and the coating removal efficiency of the wire can be further enhanced.

The laser irradiation device 10 according to the present disclosure may further include another optical system in addition to the components described in the embodiment.

The configuration of the control unit 40 in the present disclosure is not limited to the above-described embodiment. For example, the control unit 40 may control the conveyance device 200. In this case, the feeding speed acquisition unit 41 may freely input the feeding speed of the wire 100 by an operator, and the control unit 40 may control the conveyance device 200 according to the input information. The wire width input unit 42 may be configured to automatically detect the width of the wire 100 by a sensor or the like.

In the above-described embodiment, a configuration in which the laser irradiation device is fixed and the wire 100 is conveyed has been described, but the present disclosure is not limited thereto. The wire 100 may be mounted on a work table, the laser irradiation device may be mounted on a stage movable relative to the work table, and the laser irradiation device 10 may be configured to be movable in a length direction of the wire 100 with respect to the work table (wire 100). In this case, the feeding speed acquisition unit 41 can be configured to acquire a feeding speed of the stage in the length direction of the wire 100.

In order to improve the efficiency of coating removing of the wire, it is conceivable to shorten a time required for a coating removing step. For example, it is possible to shorten the time required for the coating removing step by shortening a time interval from the end of the first irradiation step to the start of the second irradiation step.

However, in a case where the interval between the first irradiation step and the second irradiation step is extremely short, the temperature of the coating becomes extremely high, and the coating may be burned. The coating removal rate of the wire in which the coating is burned decreases.

In order to solve the above problems, a coating removing method according to an aspect of the present disclosure is a coating removing method for removing a coating of the wire 100 by the laser beam L while moving the wire 100 relative to the laser irradiation device 10 in the feeding direction D, the method including:
the first irradiation step of irradiating the first irradiation region 103 on the wire 100 with the laser beam L; and
the second irradiation step of irradiating, with the laser beam L, the second irradiation region 104 that overlaps with at least a part of the first irradiation region 103, in which
the time interval from the end of the first irradiation step to the start of the second irradiation step is at least 0.5 ms or more.

With the above configuration, the time interval from the end of the first irradiation step to the start of the second irradiation step is at least 0.5 ms or more, and therefore, it is possible to provide a coating removing method capable of efficiently performing coating removing while maintaining a high exposure degree of the center conductor of the wire after the coating removing.

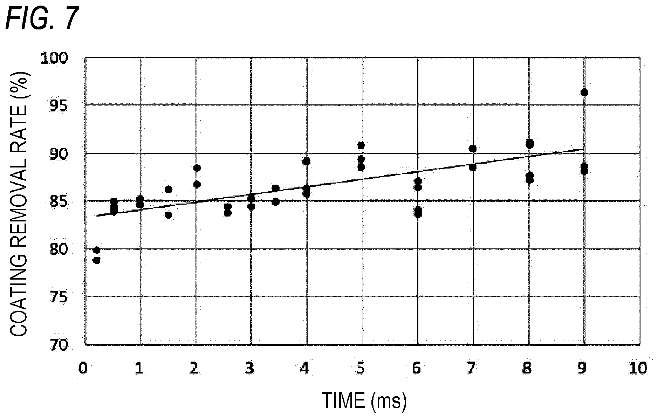

In order to clarify a relation between the time interval between the irradiation steps and the exposure degree of the center conductor, the present inventor performed a coating removing experiment. The coating removing experiment was performed by setting the time from the end of the first irradiation step to the start of the second irradiation step for a plurality of times and measuring the coating removal rate of the wire 100 in each time. FIG. 7 is a graph illustrating the relation between the time from the end of the first irradiation step to the start of the second irradiation step and the coating removal rate of the wire 100.

As illustrated in FIG. 7, when the time interval from the end of the first irradiation step to the start of the second irradiation step is 0.5 ms or more, the coating removal rate of the wire after the coating removing can be set to a value higher than 80%.

In the above configuration, the laser irradiation device 10 may generate the spot region S at at least two positions in the feeding direction D on the wire 100, and a separation distance of the spot region S in the feeding direction may be equal to or more than feeding speed × 0.5 [ms].

Here, it is assumed that a separation distance between an upstream spot region S1 and a downstream spot region S2 in the feeding direction is L [mm], and the feeding speed of the wire 100 is X [mm/ms]. Thus, a time t required for feeding this portion the separation distance L is calculated as t = L/X. When the time t is 0.5 [ms] or more, the coating removal rate is higher than 80%. That is, from a relational expression that L/X ≥ 0.5, a relation is derived in which the separation distance L of the spot regions S1 and S2 in the feeding direction D is preferably equal to or more than feeding speed X × 0.5 [ms].

With such a configuration, the coating removing is simultaneously performed in a plurality of regions on the wire 100, and a time interval between the first irradiation step performed in the upstream spot region S1 and the second irradiation step performed in the downstream spot region S2 is 0.5 [ms] or more. Therefore, it is possible to provide a coating removing method capable of efficiently and reliably removing the coating.

Another aspect of the coating removing device 1 according to the present disclosure is a coating removing device for removing a coating of the wire 100 by the laser beam L while moving the wire 100 relative to the laser irradiation device 10 in a feeding direction, in which
the laser irradiation device 10 includes
the laser beam source unit configured to output the laser beam L,
the scanning unit 30 configured to scan the spot region S of the laser beam L on the wire 100, and
the control unit 40 configured to control the scanning unit 30, in which
the control unit 40 controls the scanning unit 30 so that
after the spot region S of the laser beam L is moved to irradiate the first irradiation region 103 with the laser beam, the second irradiation region 104 is irradiated with the laser beam to overlap with at least a part of the first irradiation region 103, and
a time interval from end of irradiation, with the laser beam L, the first irradiation region 103 to start of irradiation, with the laser beam, the second irradiation region 104 is at least 0.5 ms or more.

With the above configuration, it is possible to provide a coating removing method capable of efficiently performing coating removing while maintaining a high exposure degree of the center conductor of the wire after the coating removing.

In the above configuration, the spot region S may be generated at at least two positions in the feeding direction D on the wire 100, and a separation distance of the spot regions S in the feeding direction D may be equal to or more than feeding speed × 0.5 [ms]. With the above configuration, coating removing can be performed at the same time in a plurality of regions on the wire 100, and therefore, it is possible to provide a coating removing device capable of efficiently performing coating removing.

In the above aspect, in order to generate at least two spot regions S on the wire 100, for example, the laser irradiation device may have a configuration including a multifocal lens.

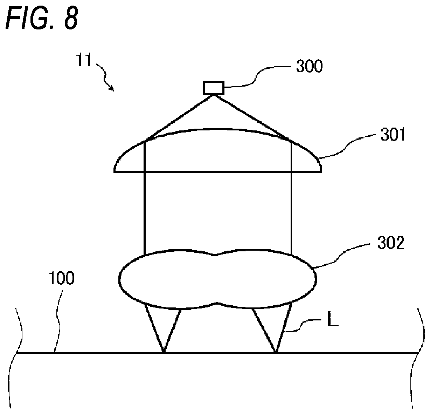

FIG. 8 is a diagram illustrating an internal structure of the laser irradiation device 11 according to another embodiment of the present disclosure. In the example illustrated in FIG. 8, the laser irradiation device 11 includes a light source 300, a collimating lens 301 capable of collimating the laser beam L emitted from the light source 300 as parallel light, and a multifocal lens 302. With this configuration, the laser beam L can be condensed at a plurality of positions on the wire 100 by the multifocal lens 302. Accordingly, it is possible to generate a plurality of spot regions S without increasing the number of laser beam sources, and it is possible to suppress an increase in size of the laser irradiation device 10.

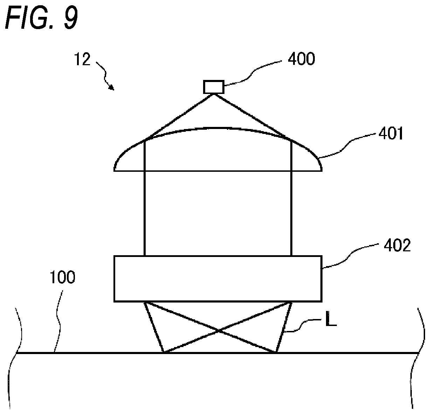

In the above aspect, in order to generate at least two spot regions S on the wire 100, for example, the laser irradiation device may have a configuration including a diffractive optical element. FIG. 9 is a diagram illustrating an internal structure of a laser irradiation device 12 according to another embodiment of the present disclosure. In the example illustrated in FIG. 9, the laser irradiation device 12 includes a light source 400, a collimating lens 401 that may collimate the laser beam L emitted from the light source 400 into parallel light, and a diffractive optical element 402. With this configuration, it is possible to divide a single laser beam beam and generate a plurality of spot regions S on the wire 100. Accordingly, it is possible to generate a plurality of spot regions S without increasing the number of laser beam sources, and it is possible to suppress an increase in size of the laser irradiation device 10.

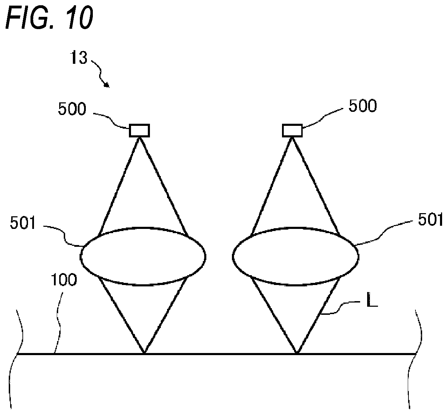

In the above aspect, in order to generate at least two spot regions S on the wire 100, for example, the laser irradiation device 10 may include, as the laser beam source unit, a first laser beam source capable of generating a first spot region and a second laser beam source capable of generating a second spot region. FIG. 10 is a diagram illustrating an internal structure of a laser irradiation device 13 according to another embodiment of the present disclosure. In the example illustrated in FIG. 10, the laser irradiation device 13 includes a plurality of light sources 500 and a condensing lens 501 corresponding to each of the light sources 500. With this configuration, the first spot region and the second spot region can be generated by different laser beam sources, and therefore, the output of the laser beam per spot region S can be increased as compared with the case where a single laser beam source is used. Accordingly, it is possible to provide a coating removing device capable of efficiently performing coating removing.

### REFERENCE SIGNS LIST

1 coating removing device
10, 10', 11, 12, 13 laser irradiation device
20 laser beam source
30 galvanometer optical system
31 X-axis galvanometer scanner
31a X-axis galvanometer mirror
31b X-axis galvanometer motor
32 Y-axis galvanometer scanner
32a Y-axis galvanometer mirror
32b Y-axis galvanometer motor
33 mirror
40 control unit
41 feeding speed acquisition unit
42 wire width input unit
43 input unit
100 wire
101 coated region
102 removed region
103 first irradiation region
104 second irradiation region
200 conveyance device
300, 400, 500 light source
301, 401 collimating lens
302 multifocal lens
402 diffractive optical element
501 condensing lens
D feeding direction
E locus
F first direction
F' second direction
S spot region

## Claims

1. A coating removing method for removing a coating of a wire by laser beam while moving the wire relative to a laser irradiation device in a feeding direction, the method comprising:
a first irradiation step of moving a spot region of the laser beam in a first direction to traverse the wire and irradiating a first irradiation region on the wire with the laser beam;
a first feeding step of moving the spot region in the feeding direction of the wire after the first irradiation step; and
a second irradiation step of moving the spot region of the laser beam in a second direction opposite to the first direction to traverse the wire and irradiating, with the laser beam, a second irradiation region that overlaps with at least a part of the first irradiation region.

2. The coating removing method according to claim 1, further comprising:
a second feeding step of moving the spot region in a direction opposite to the feeding direction after the second irradiation step,
wherein a moving amount in the first feeding step is equal to a moving amount in the second feeding step.

3. The coating removing method according to claim 1 or 2,
wherein a moving amount of the spot region in the feeding direction in the first irradiation step is smaller than a moving amount of the spot region in the feeding direction in the first feeding step.

4. The coating removing method according to claim 1 or 2,
wherein a moving amount of the spot region in the first direction in the first irradiation step is larger than a moving amount of the spot region in the first direction in the first feeding step.

5. The coating removing method according to claim 2,
wherein when "n" is a natural number and "i" is a natural number smaller than "n",
from start of the first irradiation step to end of the second feeding step is repeated "n" times, and
an i-th first irradiation region and an (i-1)-th second irradiation region overlap at least partially.

6. The coating removing method according to claim 2,
wherein the laser beam is continuously emitted from the start of the first irradiation step to the end of the second feeding step.

7. The coating removing method according to claim 2,
wherein the spot region of the laser beam draws an elliptical locus from the start of the first irradiation step to the end of the second feeding step.

8. The coating removing method according to claim 1,
wherein a time interval from end of the first irradiation step to start of the second irradiation step is at least 0.5 ms or more.

9. A coating removing device for removing a coating of a wire that is moving relative to a laser beam in a feed direction by irradiating the laser beam, the coating removing device comprising:
a laser irradiation device comprising:
a laser beam source unit configured to output the laser beam; and
a scanning unit configured to scan a spot region of the laser beam on the wire; and
a control unit configured to control the scanning unit,
wherein the control unit controls the scanning unit to:
move the spot region of the laser beam in a first direction to traverse the wire and irradiate a first irradiation region with the laser beam;
move the spot region in the feeding direction; and
move the spot region of the laser beam in a second direction opposite to the first direction to traverse the wire and irradiate, with the laser beam, a second irradiation region that overlaps with at least a part of the first irradiation region.

10. The coating removing device according to claim 9,
wherein the control unit controls the scanning unit based on a relative speed of the coating removing device and the wire in the feeding direction.

11. A coating removing method for removing a coating of a wire by laser beam while moving the wire relative to a laser irradiation device in a feeding direction, the method comprising:
a first irradiation step of irradiating a first irradiation region on the wire with laser beam; and
a second irradiation step of irradiating, with laser beam, a second irradiation region that overlaps with at least a part of the first irradiation region,
wherein a time interval from end of the first irradiation step to start of the second irradiation step is at least 0.5 [ms] or more.

12. The coating removing method according to claim 11,
wherein at least two spot regions of laser beam are generated on the wire at positions along the feeding direction, and
wherein a separation distance of the spot regions in the feeding direction is equal to or more than feeding speed × 0.5 [ms].

13. A coating removing device for removing a coating of a wire that is moving relative to a laser beam in a feed direction by irradiating the laser beam, the coating removing device comprising:
a laser irradiation device comprising:
a laser beam source unit configured to output the laser beam; and
a scanning unit configured to scan a spot region of the laser beam on the wire; and
a control unit configured to control the scanning unit,
wherein the control unit controls the scanning unit such that:
after the spot region of the laser beam is moved to irradiate a first irradiation region with the laser beam, a second irradiation region is irradiated with the laser beam to overlap with at least a part of the first irradiation region; and
a time interval from end of irradiation, with the laser beam, of the first irradiation region to start of irradiation, with the laser beam, of the second irradiation region is at least 0.5 ms or more.

14. The coating removing device according to claim 13,
wherein the spot region is configured to be generated at at least two positions along the feeding direction on the wire, and
wherein a separation distance of the spot regions in the feeding direction is equal to or more than feeding speed × 0.5 [ms].

15. The coating removing device according to claim 13, wherein
the laser irradiation device further comprises a multifocal lens,
and/or
the laser irradiation device further comprises a diffractive optical element, and/or
the laser beam source unit further comprises:
a first laser beam source capable of generating a first spot region; and
a second laser beam source capable of generating a second spot region.
